# EUROPEAN PATENT SPECIFICATION

(11) **EP 2 076 031 B1**
(45) Date of publication and mention of the grant of the patent: **03.11.2010**
(21) Application number: 08172716.6
(22) Date of filing: 23.12.2008
(51) Int. Cl.: H04N 5/445, G06F 3/048, G09G 5/00

(54) **Dynamic-colored user menu for display systems**
Dynamisch gefärbtes Benutzermenü für Anzeigesysteme
Menu utilisateur à couleurs dynamiques pour systèmes d'affichage

(30) Priority: 28.12.2007 TR 200709081
(43) Date of publication of application: 01.07.2009
(73) Proprietor: Vestel Elektronik Sanayi ve Ticaret A.S., 45030 Manisa (TR)
(72) Inventor: Genç, Necmiye, 34398 Istanbul (TR); Akçadogan, Çagatay, 34398 Istanbul (TR)
(74) Representative: Cayli, Hülya

(56) References cited:
- GB-A- 2 354 142
- US-A1- 2003 081 931
- US-A1- 2006 044 324
- US-A1- 2007 229 531

## Description

### Field of Invention

The present invention relates to a method and system for automatically changing the colors of on-screen menus particularly used in display systems, according to the dominant color of a background image viewed at that moment.

### Prior Art

Display systems make use of internal microprocessors for receiving signals in various forms from various sources, processing these signals and transmitting them to the display system, and controlling other functions in relation to the display system.

Menus are provided on the screens of display systems, such menus appearing and disappearing for the control of said systems such as televisions, and of other electronic devices such as DVD players, satellite receivers, compliant with suchlike systems which are widely used in the consumer electronics; thanks to such menus appearing on the screen, i.e. on screen displays (OSD), values of parameters such as time, audio, video are changed according to user preferences. Subtitles which are provided in any program in the display system or are read from any source are displayed together with the image on the screen.

Another feature of the image processor according to the prior art used for transmitting the parameters such as time, audio, video, and other system adjustment parameters to the display system by processing the image signals, as well as for conducting other processes in relation to the image is to display the on-screen menus on an image viewed simultaneously on the screen in a superimposed manner. Thanks to this feature, the user is enabled to see some of the image he/she wants to view together with the on-screen menus so as to make adjustments on the image and on other parameters at the same time. The case in which the on-screen menus or subtitles are of the same color with that of the background image usually avoids the user from distinguishing the on-screen menus or subtitles.

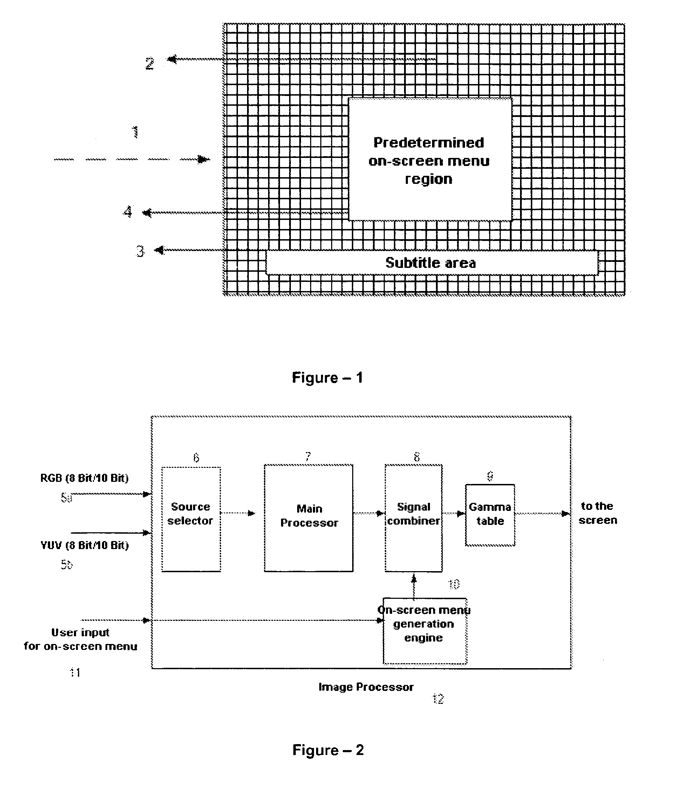

As is the case of the example illustrated in Figure 1 with respect to the prior art, there is provided an on-screen adjustment menu (4) on the screen (1) in a display system such as an LCD television system. The background (2) and the on-screen adjustment menu (4) are viewed on the same screen. Additionally, the subtitles (3) are also displayed on the same screen. Thus, the case in which the background color on the screen is the same with that of the on-screen adjustment menu and/or of the subtitles in the prior art causes the users to experience perception-related problems.

Referring back to the prior art, it is possible for the user to adjust the color of on-screen menus and subtitles (if present) emerging on the screen or to change the predetermined colors according to personal preferences. The system according to the prior art is illustrated in Figure 2. To the image processor (12) of the system illustrated in Figure 2 are transmitted image signals (5a, 5b) of a plurality of forms. With respect to the prior art, one or several of such image signal(s) is/are selected from a source selector (6) and transmitted to the main processor (7). The main processor is the unit that executes the required processes on the image signals and provides the generation of an image on the screen connected to the display system. With respect to the prior art, if no command is input by the user (11) for readjusting the colors of the on-screen adjustment menus, the on-screen menu previously set on the display system is being run. If the user wants to change the colors of the on-screen adjustment menus, the menu generation engine (10) regenerates the on-screen adjustment menus according to the input commands transmitted by the user (11). Following this phase, the image signals processed by the main processor and the on-screen adjustment menus generated by the menu generation engine (10) are transmitted to the signal combining unit (8). As for the signal combining unit, it combines the on-screen menus with the image signals. Before the image signals containing also the on-screen menus are transmitted to the screen connected to the display system, they are subjected to a gamma correction process by making use of the values queried from the gamma table (9) and thereafter transmitted to the screen of the display system.

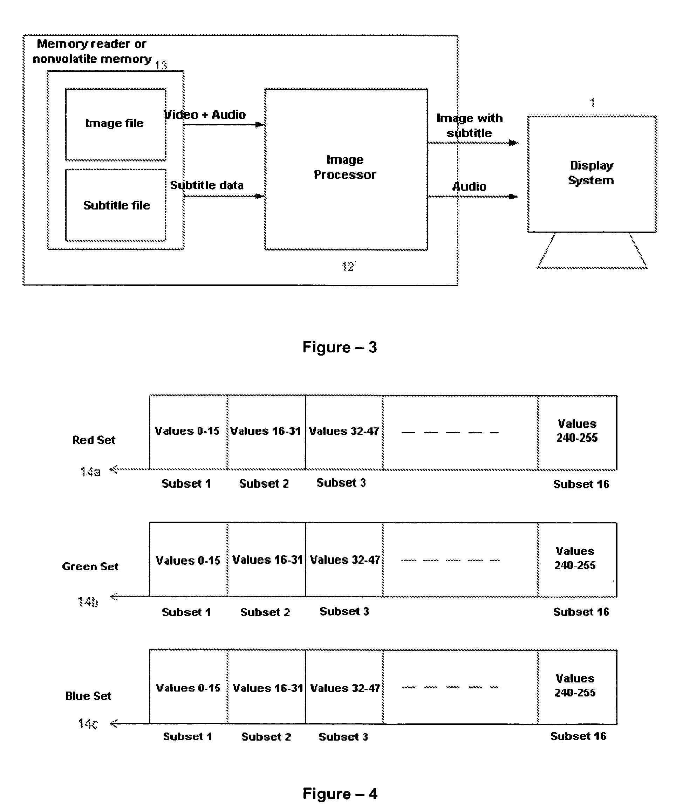

The manner how the subtitles are generated on the screen according to the present invention is illustrated in Figure 3. In a system like the one given in Figure 3 the manner by which the subtitles are added to the image signals transmitted to the display system from an external device connected to said display system (or from an internal system combinable with the display system) is illustrated. As exemplified with the system given in Figure 3, it is possible to feed the image and subtitle data from a memory reader or from a nonvolatile memory (13) separately. After such received data are processed in an image processor (12), they are reflected to a screen (1) connected to the display system.

A black diagonal zone, i.e. a black belt, can be provided in many display systems for allowing the user to conveniently read the subtitles (this belt is provided below the image or both below and above the image so as not to block the image itself). Although suchlike black belts provide an easy perception of white-color subtitles, they block some parts of the viewed image and unfortunately reduce the quality of image as perceived by the user. In addition to the embodiment in which black belts are used and while the known 4*3 aspect ratio may cover the entire image screen, the 16*9 aspect ratio provides black gaps over and under the image, but the position and colors of subtitles are kept as it is. In a system in which the whole screen is covered in 4*3 aspect ratio, if the colors of subtitles provided on the image are the same with that of the image, the user cannot detect the subtitles and benefit lesser from the display system. The automatic changing of colors and positions of subtitles according to the content of a broadcast viewed on a display system shall provide the users with great benefit.

In the patent application JP2006033435A2, there is disclosed a technique by which the on-screen menus are maintained independent from the background color adjustments and the colors of on-screen menus are kept the same even if the video adjustments are changed.

Apart from the techniques described above, it shall be beneficial to dynamically change the on-screen menus and/or subtitles according to the images viewed on the screen of a display system by the users.

In the patent application US2006044324 A1, there is a disclosed method for adaptive changing a displayed foreground colour when a conflict between the displayed foreground colour and an extracted background colour is detected. According to a predetermined legibility criterion which is based on luminance contrast, hue contrast and warm/cold contrast of the foreground and background colours, a new foreground colour is selected from a colour pool candidate in the case of a conflict between displayed foreground colour and an extracted background colour.

Another patent application US2003081931A1, describes a video processing apparatus which retrieves highlight data from video data of DVD video standards and analyzes its highlight data and acquires a display position of a highlight on a display screen. Further, the video processing apparatus analyzes predetermined on-screen display data and acquires a display position of on screen display on the display screen. Then, the video processing apparatus displays the on-screen display on the display screen so as not to overlap with menu items of a main menu screen on which the highlight is overlaid by controlling the display position of the on-screen display so as to differ from the display position of the highlight.

### Objective of Invention

The objective of the present invention is to provide the opportunity of dynamically changing the color of on-screen menus belonging to the display system itself or to another display system according to the image content at the background.

### Description of Figures

The present invention is to be disclosed hereunder with references made to annexed figures briefly described as following.
Figure 1 is a block diagram by which the positions are symbolized of an on-screen menu and subtitles on an LCD television system according to the prior art.
Figure 2 is a block diagram of a technique used for generating on-screen menus on an image of a display system according to the prior art.
Figure 3 is a block diagram symbolizing a system which provides the displaying of subtitles on a main image according to the prior art.
Figure 4 is a block diagram symbolizing the memorizing process of color values for finding the dominant color of an image displayed on the screen of a display system.
Figure 5 is a block diagram symbolizing a system used for automatically changing the colors of the on-screen menu in line with the content of an image displayed on a display system according to the present invention.
Figure 6 is a block diagram symbolizing a system used for automatically changing the colors of subtitles in line with the content of an image displayed on a display system according to the present invention.

### Description of Invention

Although analog or digital image signals are detected by the display system in many different forms, they generally are processed at the image processor. Such processes may take place in the form of formatting the incoming image signals, configuring the image according to the preference of the user or manufacturer, and making adjustments on the image. Another function of the image processor in addition to those defined above is positioning the on-screen menus and subtitles on the image.

With respect to the working principle of the present invention, the dominant color of the image displayed on the screen (20) connected to the display system must be calculated in order to differentiate the colors of the generated on-screen menus and subtitles from the colors of the image displayed on the screen (20) connected to the display system and thus to surpass the problems encountered in the State of the Art. Particularly on the display screens of LCD (liquid crystal display) televisions, thousands of pixels, providing the generation of image, are present and the pixel values on the screen (20) connected to the display system must be calculated accordingly for finding out the dominant color. In this context, it shall be described below in detail as to how the dominant color is calculated of images played on a screen (20) connected to a display system and how the colors of on-screen menus are changed dynamically.

In the context of the working principle according to the present invention, either the color values of all pixels present in the image can be calculated, or only the color values of those pixels present only under the on-screen menu can be calculated for finding out the dominant color present in the image displayed on the screen (20) of the display system. The idea of calculating the pixel color values of the part on the screen (20) which is left under the on-screen menu, in place of calculating all pixel values present on the entire screen (20) connected to the display system with lower processing purposes, and of maintaining the color of the on-screen menu different only according to the color of the image on which it is superimposed may provide the users with the chance of conveniently perceiving the on-screen menus. In this context, the zone at which the on-screen menu is present over the screen (20) connected to the display system may be determined by means of two- or three-dimensional color detection methods.

While the dominant color in the image over which the on-screen menu is present is calculated, the pixels making up the image can be analyzed in the form of certain sets. Generally all colors of display systems are composed by combining the main colors red, green, and blue (red-R, green-G, blue-B). Since the color value of each pixel is a combination of these three main colors for that instant image, the red, green, and blue color data can be calculated on dedicated memory areas in a memory connected to the display system. Distinct memory areas (14a, 14b, 14c) may be reserved in the memory for red, green, and blue colors in order to calculate the values thereof. An example of such a calculation is given in Figure 4. With respect to the system illustrated in Figure 4, color storage zones -in the form of "red set (14a)", "blue set (14c)", and "green set (14b) " for the colors red, blue, and green, respectively, among the pixel colors- are used in the memory, it being possible to separate these groups into subgroups (subset 1-16) among themselves. Such memory zones can be used for calculating the dominant color of the region over which the on-screen menu is present, wherein the read color values of pixels are written on memory zones reserved individually in the memory according to the present invention. As a result of processing the pixel color values stored in the memory zone by means of the image processor (12) according to the present invention, the dominant color at the region over which the on-screen menu is present can be found out.

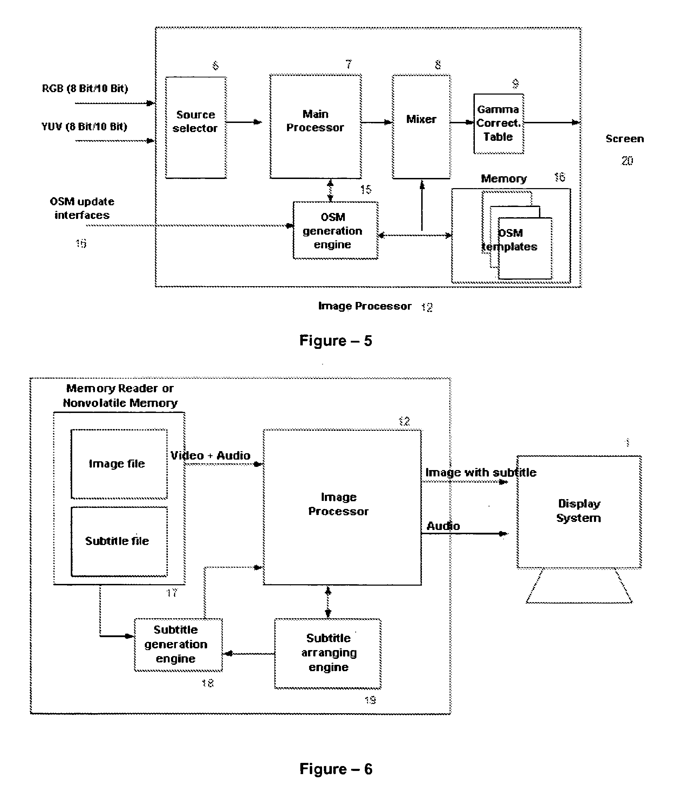

The area over which the on-screen menu is present may be assumed the entire screen (20), and all pixel values on the screen (20) can be calculated while calculating the dominant color of an image displayed on the screen (20) connected to the display system. Other techniques may also be used for calculating the dominant color present in an image displayed on the display system. The manner how the colors of on-screen menus are changed in line with the dominant color calculated for an image displayed on a screen (20) connected to a display system according to the present invention shall be described in detail on the system illustrated in Figure 5.

With respect to the present invention, a plurality of image signals are received by the system exemplified in Figure 5 from a plurality of sources. Such image signals may be compressed in different forms according to the country or to signal sources they are received from, e.g. they may be in the form of RGB (red, green, blue) (5a), or in the form signals represented by the term YUV (5b), in which "y" resembles brightness and "v" stands for the color value. One or more than one of such signals is/are selected by a source selector (6) and transmitted to a main processor (7) in the image processor (12).

If the user does not enter a command for generating an on-screen menu, the signal processed by the main processor (7) is transmitted to a signal mixer (8). If the signal comes only from the main processor (7), the signal mixer (8) transmits this signal to a gamma correction table (9) and the image is displayed on the screen (20) according to gamma values selected in line with the features of the display screen (panel). With respect to the present invention, the main processor (7) in the display system is capable of calculating the dominant color in the image to be displayed on the screen (20) by making use of the methods defined above. And if the user enters any command for generating an on-screen menu, an on-screen menu (OSM) generation engine (15) communicates with the main processor (7) and according to the dominant color data of the image displayed on the screen (20), it automatically changes one of the on-screen menu templates (among other on-screen menus of the same color) previously installed onto the memory (16) during a certain color changing period according to a color changing rule. The dominant color of an image displayed on the screen (20) is calculated by the main processor (7) provided in the display system during a dominant color detection period, e.g. in one second (the dominant color to be displayed on the screen during one second), and is automatically changed in a color changing period that differs from one second, e.g. in three seconds, without yielding the same color with the dominant one.

The dominant color detection period is previously determined by the manufacturer or can be altered by the user. After the dominant color in an image displayed on the screen (20) connected to a display system is calculated, the color of on-screen menus is changed to produce a different color from the color of the image. In an exemplary instance, in which the dominant color is calculated to be red for one second by the main processor (7), the color of the on-screen menu is generated as different from red, e.g. in blue, for three seconds on the screen (20) connected to the display system. As for the case when such three-second changing period ends off, the dominant color available on the screen (20) is calculated for a second dominant color detection period, and if the calculated dominant color in this second period is different from the dominant color calculated in the first period, the color of the on-screen menu is again changed automatically and this operation is applied during such determined periods.

If the dominant color of the image present on the screen (20) becomes different in two successive dominant color detection periods, the color of the menu on said screen can either be changed according to the dominant color of the second period instantly, or a softer switching process can be provided. For instance, since the color of the on-screen menu will be changed twice according to two dominant colors calculated, it is possible to switch to a color that is between these two dominant colors before making a sharp change in colors and the switching time period may be shortened so that the switching between colors is made more softly. For performing a soft (gradual) switching process according to the present invention, the dominant color data maintained in the memory within the display system for that momentary image can be compared to the dominant color data calculated at a second period, so that a gradual switching process is made between the color values according to the result of the comparison. As illustrated in the example of Figure 4, for instance, considering the memory locations of red, green, and blue colors in a memory and assuming that 16 subsets are present in the group reserved for the red color, the 1^{st} set shall contain the values 0-15 of red and the 16^{th} set shall contain the values 240-255 of the same red color (the same subsets may be considered for the green and blue colors). If the values of red, green, and blue are 8, 17, and 150, respectively for an image in a scenario assuming that a plurality of image is reflected to the display screen during a predetermined dominant color detection period, these values will refer to the 1^{st} of the subsets of red, to the 2^{nd} of the subsets of green, and to the 10^{th} of the subsets of blue.

If, for an image displayed at any moment, the red color value corresponds to the 1^{st} red subset, the green value to the 5^{th} subset, and the blue value to the 8^{th} blue subset in a dominant color (if, for instance, the dominant color in that instant image is 0, 70, and 120 for red, green, and blue colors, respectively), the gradual (soft) switching of the color of which the red, green, and blue subset values are 2, 8, and 10, to the color of which the color values are 1, 5, and 8, respectively, can be performed as following:
1^{st} color subset value 2-8-10 (wait as many as N images)
2^{nd} color subset value 1-8-10 (wait as many as N images)
3^{rd} color subset value 1-7-10 (wait as many as N images)
4^{th} color subset value 1-6-10 (wait as many as N images)
5^{th} color subset value 1-5-10 (wait as many as N images)
6^{th} color subset value 1-5-9 (wait as many as N images)
7^{th} color subset value 1-5-8 (wait as many as N images)

if the difference between the color values of the subsets is too high, the gradual switching process can be made more slowly, and if it is relatively lower, it can be made more rapidly. By making use of the color value of that moment for each gradual switching, a predetermined on-screen menu color can be changed according to a determined changing rule. The value N referred to above, which is predetermined by the manufacturer and can be altered by the user afterwards, symbolizes the duration of that image to appear on the display screen and determines the sharpness or softness extent of switches.

Another embodiment that does not form part of the present invention is the automatic changing of the colors of subtitles added onto an image displayed on a screen of a display system according to the content of said first image. In this embodiment, the shape of the image displayed on the screen and the regions on which no image is present are known; e.g. it is known whether there is a black belt (a black zone present on the top or bottom of the image) present on an image displayed on the display system, and it is further known as to which of the 4*3 or 16*9 aspect ratios are being used.

According to said embodiment for the subtitles, no forming part of the present invention, the region on which the subtitle is to be positioned on the image (first image) of the display system' screen is previously known. If the image displayed on the screen and the subtitles added onto that image do become superimposed, the method for changing the colors of on-screen menus disclosed in the present invention is used. Accordingly, the dominant color for said first image is calculated for a predetermined period of time; the dominant color may either be calculated for the whole area of the image displayed on the display system's screen as disclosed in the present invention, or for the location where the subtitle is present only. The color of subtitles can be automatically changed to a color that would be different from the calculated dominant color; the dominant color of the image displayed on the display system's screen can be calculated for a one-second duration as the first image, and can be changed to color for a period of three seconds that differs from the dominant color of the first image. By taking into account the content of image format according to the embodiment the color and position of subtitles can automatically be changed and such a system shall be described in detail by referring to the system illustrated in Figure 6.

In the system according to Figure 6, subtitle and image files (17) present on a memory reader or nonvolatile disk are exemplified. Such a system can either be a memory reader or a nonvolatile disk in the display system, or belong to an external device (DVD player, satellite receiver) externally connected to the display system. According to this system, only the subtitle files among the image and subtitle files connected to memory reader or nonvolatile memory are transmitted to a subtitle generation engine (18). Before the subtitle data are transmitted from here to the image processor (12), they are added onto the main image by a subtitle correction engine (19). The task of that subtitle correction engine is to adjust the position and timing of subtitle added onto the image, according to the features of that image (main image) displayed on the screen connected to the display system. The dominant color on the main image is calculated for a predetermined period of time; this period of time can either be determined previously by the manufacturer, or can be altered subsequently by the user. The way of finding out the dominant color of the main image is disclosed in the present invention; after the dominant color is found, the color of the subtitles added onto the main image are again changed to a color that would differ from the dominant one according to said embodiment.

Since it is known as to which position the subtitles will emerge on the main image in the known techniques, the automatic color changing feature is deactivated in cases when the subtitles are located on black belts on the image or on regions where the image is absent. Thanks to this advantage provided with the present invention, if the subtitles are located on the main image so as to correspond to a region on which the image is absent, the automatic changing system is deactivated so that processing ease and efficiency is provided. And for the cases in which the subtitles are located first at regions where the main image is absent but then on regions under which the main image appears, the automatic color correction can be activated. For instance, it is assumed that a user viewing an image with an aspect ratio of 16*9 views the main image together with the subtitles on a region of the screen where the image is absent. In this instance, if the user switches the aspect ratio to 4*3, the main image shall be enlarged on the screen, and the previous region of the subtitles in which no image were present will be filled with the image now. With respect to said embodiment, if the aspect ratio is switched from 16*9 to 4*3, the process of changing the color of subtitles shall start automatically. It shall provide great convenience to users who read subtitles on the main image to automatically change the color of subtitles added onto the main image according to the content of the main image displayed, and to automatically activate and deactivate this changing feature according to the position of subtitles.

According to said embodiment not forming part of the present invention, the subtitle arranging engine (19) shares the data on dominant colors present on the main image with the subtitle arranging engine by ensuring continues communication with the image processor (12). As for the subtitle arranging engine, it shares these data with the subtitle generation engine. In a system configured as described above, data on the dominant color of the main image and the location of subtitles over the main image are known and it is controlled whether to automatically change or not the color of subtitles so as to differ from the dominant color of the main image.

## Claims

1. A method for automatically changing the colors of on-screen menus added over an image displayed on a screen (20) of a display system according to the content of said image, comprising the steps of
• storing a plurality of on-screen menu templates on an internal memory (16) of said display system,
• selecting the proper one among the templates stored on said internal memory (16), when a command is received of a user for displaying the on-screen menu,
• adapting the color of the selected on-screen menu template so as to differ from the
calculated dominant color and reflecting it onto the screen (20)
**characterized in that** it further comprises the repetitively performed steps of;
• by detecting the location of said on-screen menu on the screen (20), calculating the dominant color of image pixels on the screen (20) located under said on-screen menu during a dominant color detection period,
• automatically changing the color of said on-screen menu to a color that is different from calculated dominant color of said image during a color changing period.

2. The method according to Claim 1, **characterized in that** said dominant color detection period is predetermined by the manufacturer.

3. The method according to Claim 2, **characterized in that** said dominant color detection period is changeable subsequently by the user.

4. The method according to Claim 1, **characterized in that** said color changing period is predetermined by the manufacturer.

5. The method according to Claim 4, **characterized in that** said color changing period is alterable subsequently by the user.

6. The method according to Claim 1, **characterized in that** color information of image pixels on the screen (20) under said on-screen menu are analyzed in the form of certain sets (14a, 14b, 14c) according to their RGB values.

7. The method according to Claim 6, **characterized in that** said analyzed RGB information are stored on a memory in said display system.

8. The method according to Claim 6, **characterized in that** analyzed RGB values are divided into further sub-groups (Subset 1-16).

9. The method according to Claim 1, **characterized in that** said color changing period is longer than said dominant color detection period.

10. The method according to Claim 1, **characterized in that** automatically changing the color of said on-screen menu softly, by means of intermediate colors, to a color that is different from calculated dominant color of said image.

11. The method according to Claim 1, **characterized in that** on-screen menu color and menu information are changeable by the user.

12. A system for
automatically changing the color of at least one on-screen menu appearing over an image displayed on a screen (20) of the display system according to the content of said first image, **characterized in that** it comprises;
• a source selector (6) to select the plurality of different types of image signals from plurality of sources,
• an internal memory (16) to store the color templates of a plurality of on-screen menus,
• an on-screen menu generation engine (15), which communicates with the main processor (7) after receiving on-screen menu generating command, to select the proper template according to command,
• a main processor (7) which detects the location of said on-screen menu on said screen (20) and calculates the dominant color of image pixels on the screen (20) located under said on-screen menu during a dominant color detection period
• at least one image processor (12), which comprises a source selector (6), an on-screen menu generation engine (15), an internal memory (16) and a main processor (7), to automatically change the color of said on-screen menu to a color template provided on said memory (16) that is not the same with the calculated dominant color during a color changing period.

13. The system according to Claim 14, **characterized in that** the memory (16) on which said on-screen menu color templates are stored is a nonvolatile memory.

## Patentansprüche

1. Verfahren, um die Farben von auf dem Bildschirm erscheinenden Menüs, die über ein Bild gelegt werden, das auf einem Bildschirm (20) eines Anzeigesystems erscheint, entsprechend dem Inhalt des Bilds automatisch abzuändern, folgende Schritte umfassend:
• Speichern mehrerer Bildschirmmenüvorlagen in einem internen Speicher (16) des Anzeigesystems,
• Auswählen der geeigneten Vorlage aus den im internen Speicher (16) gespeicherten Vorlagen, wenn ein Befehl eines Benutzers zur Anzeige des Bildschirmmenüs eingeht,
• Anpassen der Farbe der ausgewählten Bildschirmmenüvorlage, und zwar so, dass sie sich von der berechneten vorherrschenden Farbe unterscheidet, und Wiedergeben der Farbe auf dem Bildschirm (20),
**dadurch gekennzeichnet, dass** das Verfahren darüber hinaus die wiederholt durchgeführten Schritte umfasst:
• durch Erfassen der örtlichen Lage des Bildschirmmenüs auf dem Bildschirm (20), Berechnen der vorherrschenden Farbe von Bildpixeln auf dem Bildschirm (20), die sich während eines Zeitraums der Erfassung der vorherrschenden Farbe unter dem Bildschirmmenü befinden,
• automatisches Abändern der Farbe des Bildschirmmenüs während eines Farbänderungszeitraums in eine Farbe, die sich von der berechneten vorherrschenden Farbe des Bilds unterscheidet.

2. Verfahren nach Anspruch 1, **dadurch gekennzeichnet, dass** der Zeitraum der Erfassung der vorherrschenden Farbe vom Hersteller bestimmt wird.

3. Verfahren nach Anspruch 2, **dadurch gekennzeichnet, dass** der Zeitraum der Erfassung der vorherrschenden Farbe anschließend vom Benutzer verändert werden kann.

4. Verfahren nach Anspruch 1, **dadurch gekennzeichnet, dass** der Farbänderungszeitraum vom Hersteller bestimmt wird

5. Verfahren nach Anspruch 4, **dadurch gekennzeichnet, dass** der Farbänderungszeitraum anschließend vom Benutzer verändert werden kann.

6. Verfahren nach Anspruch 1, **dadurch gekennzeichnet, dass** die Farbdaten von Bildpixeln auf dem Bildschirm (20) unter dem Bildschirmmenü in Form von bestimmten Gruppen (14a, 14b, 14c) entsprechend ihren RGB-Werten analysiert werden.

7. Verfahren nach Anspruch 6, **dadurch gekennzeichnet, dass** die analysierten RGB-Daten in einem Speicher in dem Anzeigesystem gespeichert werden.

8. Verfahren nach Anspruch 6, **dadurch gekennzeichnet, dass** die analysierten RGB-Werte weiter in Untergruppen (Untergruppe 1 - 16) unterteilt werden.

9. Verfahren nach Anspruch 1, **dadurch gekennzeichnet, dass** der Farbänderungszeitraum länger ist als der Zeitraum der Erfassung der vorherrschenden Farbe.

10. Verfahren nach Anspruch 1, **dadurch gekennzeichnet, dass** die Farbe des Bildschirmmenüs mittels Zwischenfarben sanft auf eine Farbe abgeändert wird, die sich von der berechneten vorherrschenden Farbe des Bilds unterscheidet.

11. Verfahren nach Anspruch 1, **dadurch gekennzeichnet, dass** eine Bildschirmmenüfarbe und Menüdaten vom Benutzer verändert werden können.

12. System, um die Farbe mindestens eines Bildschirmmenüs, das über einem auf einem Bildschirm (20) des Anzeigesystems angezeigten Bild erscheint, entsprechend dem Inhalt des ersten Bilds automatisch abzuändern, **dadurch gekennzeichnet, dass** es umfasst:
• eine Quellenauswahlvorrichtung (6), um die mehreren unterschiedlichen Arten von Bildsignalen aus mehreren Quellen auszuwählen,
• einen internen Speicher (16), um die Farbvorlagen mehrerer Bildschirmmenüs zu speichern,
• einer Bildschirmmenügenerierungsvorrichtung (15), die mit einem Hauptprozessor (7) nach einem Empfang eines Bildschirmmenügenerierungsbefehls kommuniziert, um die geeignete Vorlage entsprechend dem Befehl auszuwählen,
• einen Hauptprozessor (7), der die örtliche Lage des Bildschirmmenüs auf dem Bildschirm (20) erfasst und die vorherrschende Farbe von auf dem Bildschirm (20) unter dem Bildschirmmenü befindlichen Bildpixeln während eines Zeitraums der Erfassung der vorherrschenden Farbe berechnet,
• mindestens einen Bildprozessor (12), der eine Quellenauswahlvorrichtung (6), eine Bildschirmmenügenerierungsvorrichtung (15), einen internen Speicher (16) und einen Hauptprozessor (7) umfasst, um die Farbe des Bildschirmmenüs auf eine im Speicher (16) bereitgestellte Farbvorlage, bei der es sich nicht um dieselbe wie die berechnete vorherrschende Farbe handelt, während eines Farbänderungszeitraums abzuändern.

13. System nach Anspruch 14, **dadurch gekennzeichnet, dass** es sich bei dem Speicher (16), in dem die Bildschirmmenüfarbvorlagen gespeichert sind, um einen nichtflüchtigen Speicher handelt.

## Revendications

1. Procédé pour modifier automatiquement les couleurs de menus écran ajoutés sur une image affichée sur un écran (20) d'un système d'affichage selon le contenu de ladite image, comprenant les étapes consistant à
- stocker une pluralité de modèles de menus écran sur une mémoire interne (16) dudit système d'affichage,
- choisir le modèle approprié parmi les modèles stockés sur ladite mémoire interne (16), lorsqu'une commande est reçue d'un utilisateur pour afficher le menu écran,
- adapter la couleur du modèle de menu écran choisi afin qu'elle soit différente de la couleur dominante calculée et la réfléchir sur l'écran (20)
**caractérisé en ce qu'**il comprend en outre les étapes réalisées de manière répétitive consistant à :
- calculer, en détectant l'emplacement dudit menu écran sur l'écran (20), la couleur dominante des pixels d'image sur l'écran (20) se trouvant sous ledit menu écran au cours d'une période de détection de couleur dominante,
- modifier automatiquement la couleur dudit menu écran en une couleur qui est différente de la couleur dominante calculée de ladite image au cours d'une période de modification de couleur.

2. Procédé selon la revendication 1, **caractérisé en ce que** ladite période de détection de couleur dominante est prédéterminée par le fabricant.

3. Procédé selon la revendication 2, **caractérisé en ce que** ladite période de détection de couleur dominante est modifiable ultérieurement par l'utilisateur.

4. Procédé selon la revendication 1, **caractérisé en ce que** ladite période de modification de couleur est prédéterminée par le fabricant.

5. Procédé selon la revendication 4, **caractérisé en ce que** ladite période de modification de couleur est modifiable ultérieurement par l'utilisateur.

6. Procédé selon la revendication 1, **caractérisé en ce que** les informations de couleur des pixels d'image sur l'écran (20) sous ledit menu écran sont analysées sous la forme de certains ensembles (14a, 14b, 14c) selon leurs valeurs RVB.

7. Procédé selon la revendication 6, **caractérisé en ce que** lesdites informations RVB analysées sont stockées sur une mémoire dans ledit système d'affichage.

8. Procédé selon la revendication 6, **caractérisé en ce que** les valeurs RVB analysées sont divisées en d'autres sous-groupes (sous-ensembles 1 à 16).

9. Procédé selon la revendication 1, **caractérisé en ce que** ladite période de modification de couleur est plus longue que ladite période de détection de couleur dominante.

10. Procédé selon la revendication 1, **caractérisé en ce qu'**il consiste à modifier automatiquement la couleur dudit menu écran progressivement, au moyen de couleurs intermédiaires, en une couleur différente de la couleur dominante calculée de ladite image.

11. Procédé selon la revendication 1, **caractérisé en ce que** la couleur du menu écran et les informations du menu sont modifiables par l'utilisateur.

12. Système pour modifier automatiquement la couleur d'au moins un menu écran apparaissant sur une image affichée sur un écran (20) du système d'affichage selon le contenu de ladite première image, **caractérisé en ce qu'**il comprend :
- un sélecteur de source (6) pour choisir la pluralité des différents types de signaux d'image à partir d'une pluralité de sources,
- une mémoire interne (16) pour stocker les modèles de couleur d'une pluralité de menus écran,
- un moteur de génération de menus écran (15), qui communique avec le processeur principal (7) après réception d'une commande de génération de menu écran, afin de choisir le modèle correct en fonction de la commande,
- un processeur principal (7) qui détecte l'emplacement dudit menu écran sur ledit écran (20) et calcule la couleur dominante des pixels d'image sur l'écran (20) se trouvant sous ledit menu écran au cours d'une période de détection de couleur dominante,
- au moins un processeur d'image (12), qui comprend un sélecteur de source (6), un moteur de génération de menus écran (15), une mémoire interne (16) et un processeur principal (7), pour modifier automatiquement la couleur dudit menu écran en un modèle de couleur prévu sur ladite mémoire (16) qui n'est pas identique à la couleur dominante calculée au cours d'une période de modification de couleur.

13. Système selon la revendication 14, **caractérisé en ce que** la mémoire (16) sur laquelle lesdits modèles de couleur du menu écran sont stockés est une mémoire non volatile.
